# EUROPEAN PATENT APPLICATION

(11) **EP 1 933 283 A1**
(43) Date of publication of application: **18.06.2008**
(21) Application number: 07115914.9
(22) Date of filing: 07.09.2007
(51) Int. Cl.: G07D 7/00, H04N 1/00

(54) **Image forming apparatus and bogus note managing system including the same**

(30) Priority: 07.12.2006 KR 20060123935
(71) Applicant: Samsung Electronics Co., Ltd., Suwon-si, Gyeonggi-do 442-742 (KR)
(72) Inventor: Chi, Won Young, Gyeonggi-do, Suwon-si (KR); Kim, Jae Ho, Gyeonggi-do,Suwon-si (KR); Kong, Sook Hyun, Hwaseong-si (KR); Lee, Yoon, Suwon-si (KR); Ryu, Sung Hyun, Seoul (KR); Jung, Eun Young, Gyeonggi-do,Suwon-si (KR)
(74) Representative: Waddington, Richard

(57) **Abstract**

An image forming apparatus, a bogus note managing system including the same, and a bogus note managing method that are capable of accurately and efficiently managing a bogus note such that the bogus note cannot be used for a bad purpose, the image forming apparatus including: a read unit (110) to determine whether an object to be read is money; a storage unit (120) to store money registration information including identification information of the money; a comparison unit (130) to compare money identification information, which is received so as to identify the money, with the identification information stored in the storage unit (120) when the object to be read is the money; and a control unit (140) to control history information of the money to be stored in the storage unit (120) when the money identification information is identical to the identification information.

## Description

### BACKGROUND OF THE INVENTION

### 1. Field of the Invention

The present invention relates to an image forming apparatus, and, more particularly, to an image forming apparatus, a bogus note managing system including the same, and a bogus note managing method that are capable of accurately and efficiently managing a bogus note such that the bogus note cannot be used for a bad purpose.

### 2. Description of the Related Art

As the performance of image forming apparatuses (such as a computer scanner, a multi-color printer, a multi-color copier, a laser beam printer, and a digital camera) has improved, image resolution has also significantly improved.

However, bogus notes or bogus stocks that are made using the image forming apparatus to obtain a precise image have been increasingly used and thus forgery has become a serious social problem.

Banknotes or securities that are currently used, such as checks or merchandise coupons, are made using a variety of methods to prevent forgery such that bogus notes or bogus checks are prevented from being used in actual life.

For example, a sensor to sense money has been installed in an image forming apparatus such as a computer scanner or a multi-color copier. When money is sensed, the money is prevented from being scanned or copied. However, while this method may temporarily prevent the bogus notes or the bogus securities from increasing, the method cannot fundamentally prevent forgery.

In addition, the above-described method prevents the money from being printed by a user who does not use the bogus note for a bad purpose (for example, a user who wants to keep the bogus note as a souvenir or a user who scans the money to test the image forming apparatus).

### SUMMARY OF THE INVENTION

The invention provides an image forming apparatus, a bogus note managing system including the same, and a bogus note managing method that are capable of accurately and efficiently managing a bogus note such that the bogus note cannot be used for a bad purpose.

According to the present invention there is provided an apparatus and method as set forth in the appended claims. Other features of the invention will be apparent from the dependent claims, and the description which follows.

According to an aspect of the present invention, there is provided an image forming apparatus including: a read unit to determine whether an object to be read is money; a storage unit to store money registration information including identification information of the money; a comparison unit to compare money identification information, which is received so as to identify the money, with the identification information stored in the storage unit when the object to be read is the money; and a control unit to control history information of the money to be stored in the storage unit when the money identification information is identical to the identification information.

The money may be at least one of a bill, a check, a banknote, and stock.

The history information of the money may be at least one of information on a read date and read time of the money and information on use history of the money.

The control unit may transmit read information of the money, and the image forming apparatus may further include an output unit to output the read information of the money transmitted from the control unit.

The control unit may allow a warning message indicating transaction disapproval of a bogus note to be displayed on a predetermined screen display device when the money identification information is identical to the identification information.

The control unit may control the history information of the money to be transmitted to a public institution's server when the money identification information is identical to the identification information.

The control unit may receive output authentication information from a user in order to output the money and control the received output authentication information to be stored in the storage unit, when the money identification information is not identical to the identification information.

The output authentication information may be at least one of information on the user, detailed information on the output unit and the money identification information.

In accordance with another aspect of the invention, there is provided a bogus note managing system including an image forming apparatus, comprising: a read unit which determines whether an object to be read is money; a central management unit which stores money registration information including identification information of the money; a comparison unit which compares money identification information, which is received so as to identify the money, with the identification information stored in the storage unit when the object to be read is the money; and a control unit which controls history information of the money to be stored in the central management unit when the money identification information is identical to the identification information.

The reference to a bogus note may be a reference to bogus money, or fake money, banknotes or stock.

The money may be at least one of a bill, a check, a banknote and stock.

The history information of the money may be at least one of information on a read date and time of the money and information on use history of the money.

The control unit may transmit read information of the money, and the bogus note managing system including the image forming apparatus may further comprise an output unit which outputs the read information of the money transmitted from the control unit.

The control unit may allow a warning message indicating transaction disapproval of a bogus note to be displayed on a screen display device when the money identification information is identical to the stored identification information.

The control unit may control the history information of the money to be transmitted to a public institution's server when the money identification information is identical to the stored identification information.

The control unit may receive output authentication information from a user in order to output read information on the money and control the received output authentication information to be stored in the storage unit, when the money identification information is not identical to the identification information.

The output authentication information may be at least one of information on the user, detailed information on the output unit, and the money identification information.

A central management server may generate predetermined money management information using the history information, the money registration information, and the output authentication information.

The central management server may include: a user interface unit to receive an authentication value for use authentication; and a connection control unit to control the money management information to be output when the authentication value received from the user interface unit is identical to a reference authentication value which is previously registered for authentication.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram showing an image forming apparatus according to an embodiment of the present invention;
FIG. 2 is a block diagram showing a bogus note managing system including the image forming apparatus according to an embodiment of the present invention;
FIGS. 3A to 3D are views showing screens to display a process of receiving output authentication information from a user in order to output money; and
FIG. 4 is a flowchart illustrating a bogus note managing method according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

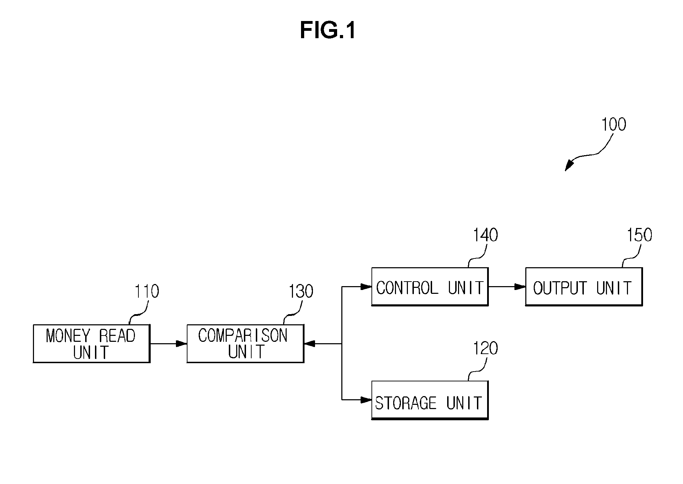

FIG. 1 is a block diagram showing an image forming apparatus according to an embodiment of the present invention. As shown in FIG. 1, the image forming apparatus 100 includes a money read unit 110, a storage unit 120, a comparison unit 130, and a control unit 140.

The money read unit 110 determines whether an object to be read is money. That is, the object to be read is optically scanned before the money read unit 110 determines whether the scanned image is the money. Generally, the determination involves a light transmission method using visible light or infrared light, and more particularly, a general optical method, a special optical method, or an ultraviolet-ray method using an ultraviolet pattern.

The money may be a general exchange object or a general circulation object to facilitate an exchange or circulation of goods in an exchange economy and may include at least one of a bill, a check, a banknote, and stock.

The storage unit 120 stores money registration information including money identification information. The money registration information indicates information on the money that is previously registered by a user who outputs the money, and includes, for example, a serial number of the money, a read date and time of the money, information on the user, and information on an output device for outputting the money. For example, the money registration information includes the information on the money (serial number of the money: 1580000, read date of the money: May 14, 2006, read time of the money: 10:05:28 AM), the information on the user (name: Gil-Dong Hong, address: 132-1, shinlim-dong, kwanak-gu, Seoul, and contact: 02-857-1057), and the information on the output device (type: A3436).

When the object to be read is determined by the money read unit 110 to be the money, the comparison unit 130 compares money identification information, which is received in order to identify the money, with identification information stored in the storage unit 120. For example, the serial number (which may be the money identification information that is received) is compared to the money registration information that is stored in the storage unit 120 in order to determine if the stored money registration information includes identification information having the same serial number.

When the money identification information is identical to the identification information stored in the storage unit 120, the control unit 140 controls history information of the money to be stored in the storage unit 120. That is, when the received money identification information is identical to the stored identification information, then the money was already output in the past. In this case, the history information of the money is controlled to be stored in the storage unit 120 so as to cope with a situation in which a great amount of bogus notes is used.

For example, if it is determined that the same money registration information as money having a serial number of 13560000 is stored in the storage unit 120 wherein the money having the same serial number was output on March 18, 2005, the history information of the money is stored in the storage unit 120 such that the user is allowed to consider a countermeasure against a situation in which a great amount of bogus notes is output.

The history information of the money may include at least one of information on the read date and time of the money, information on a number of copies requested and/or made, and the information on the use history of the money, such that the bogus note is prevented from being used. For example, the history information (information on the read date and time of money having a serial number of 1360000: December 1, 2006 03:00 AM, information on past use history: October 24, 2006 05:00 AM, information on past user: Gil-Dong Hong), that is, the information on the use history of the money, is stored in the storage unit 120.

When the received money identification information is identical to the stored identification information, the control unit 140 may control a warning message to be output indicating a transaction disapproval of the bogus note. For example, the warning message may be displayed on a screen display device. The warning message indicating the transaction disapproval of the bogus note may be, "Do not use the bogus note for an unwholesome purpose. Be mindful that penal punishment may be received when the bogus note is used." However, it is understood that according to other aspects of the present invention, the control unit 140 may control the output unit 150 to not output an image of the read object, may control the output unit 150 to output a limited number of images of the read object, or may act according to a number of copies of the object that have already been made in the past.

It is understood that other methods of outputting the warning message, aside from displaying the warning message on the screen, may be provided. Alternatively, a device for outputting a sound, such as a speaker, may be connected to the control unit 140, and a warning sound indicating the transaction disapproval of the bogus note may be output when the received money identification information is identical to the stored money registration information.

Furthermore, when the received money identification information is identical to the stored identification information, the control unit 140 controls the history information of the money to be transmitted to a public institution's server 260.

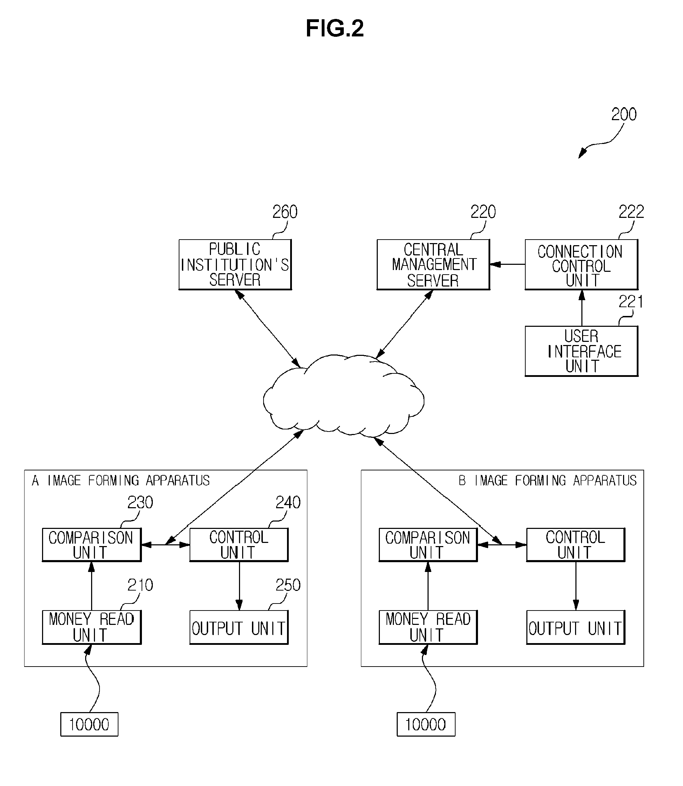

As shown in FIG. 2,in order to prevent the bogus note from being used for a bad purpose in advance, the history information of the money is transmitted to the public institution's server 260 such that a manager of the public institution's server 260 manages the history information of the money. The public institution may be, for example, a police station. A bad purpose includes, for example, purchasing consumer items with the bogus note, exchanging the bogus note for value, or entering the bogus note into commerce.

Thereafter, the control unit 140 transmits read information such as an image of the money. An output unit 150 outputs the read information of the money transmitted from the control unit 140.

The output unit 150 may be a printer for printing the read information of the money transmitted from the control unit 140. Alternatively, the transmitted read information of the money may be displayed on the screen display device.

The screen display device is used to output the read information of the money transmitted from the control unit 140, and may be, for example, a liquid crystal display (LCD), a plasma display panel (PDP), a thin-film transistor (TFT) LCD, an organic electroluminescence LCD, or a cathode ray tube (CRT).

When the received money identification information is not identical to the stored identification information, the control unit 140 receives output authentication information from the user in order to output the money, and controls the received output authentication information to be stored in the storage unit 120. The output authentication information may be at least one of the information on the user, detailed information on the output unit 150, and the money identification information.

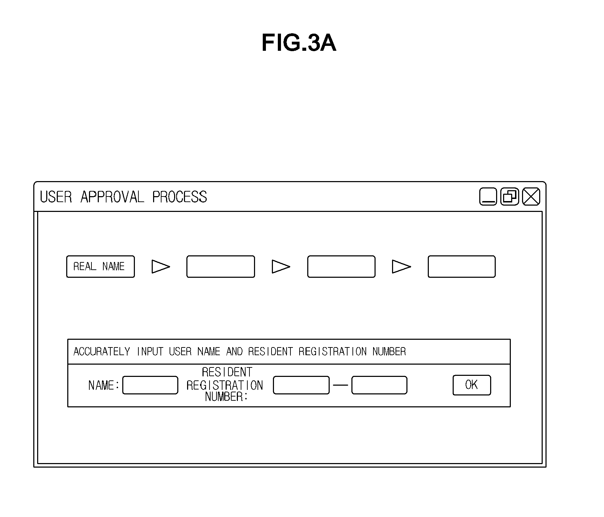

FIGS. 3A to 3D are views showing a screen to display a process of receiving the output authentication information from the user according to the present invention. FIG. 3a shows a user approval process of receiving a user name and a resident registration number.

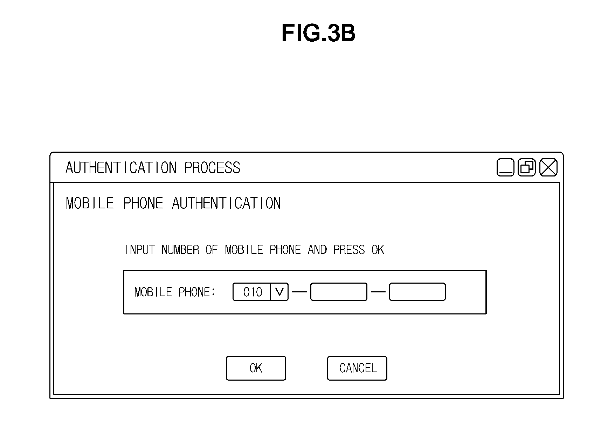

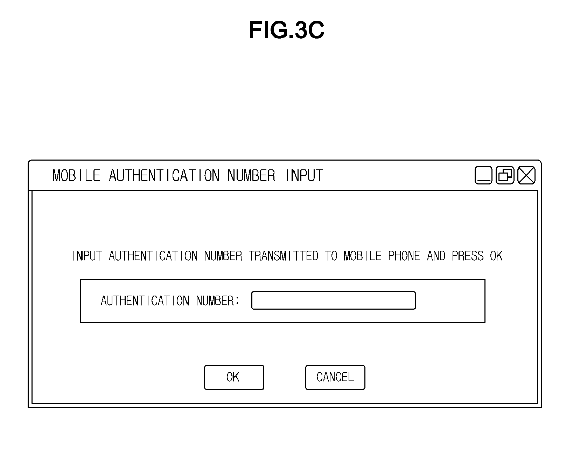

FIG. 3B shows a mobile phone authentication process of transmitting an authentication number to a mobile phone of the user when the number of the mobile phone of the user is input. According to other aspects of the present invention, other transmission types may be used, such as email, to transmit the authentication number. Then, the authentication information transmitted to the mobile phone is input to perform an authentication process, as shown in FIG. 3C.

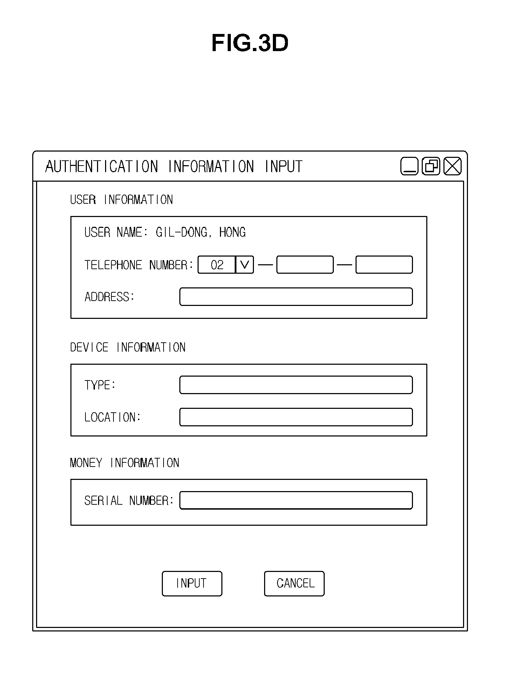

After the user authentication process is performed, as shown in FIG. 3D, an input window is output for inputting the information on the user, the detailed information on the output unit (such as a serial number and a manufacture number of the printer), the money identification information (such as a serial number of the money) and the output authentication information is received from the user.

Hereinafter, a bogus note managing system including the image forming apparatus 100 will be described. FIG. 2 is a block diagram showing a bogus note managing system 200 including the image forming apparatus 100, according to an embodiment of the present invention. As shown in FIG. 2, the bogus note managing system including the image forming apparatus includes a money read unit 210, a central management server 220, a comparison unit 230, and a control unit 240.

The money read unit 210 determines whether an object to be read is money. That is, the object to be read is optically scanned before the money read unit 210 determines whether the scanned image is the money. Generally, the determination involves a light transmission method using visible light or infrared light or a general optical method, a special optical method, or an ultraviolet-ray method using an ultraviolet pattern.

The central management server 220 stores money registration information including money identification information. The money registration information indicates information on the money that is previously registered by a user who outputs the money, and includes, for example, a serial number of the money, a read date and time of the money, information on the user, and information on an output device for outputting the money. For example, the money registration information includes the information on the money (serial number of the money: 1460000, read date of the money: April 24, 2006, read time of the money: 07:15:32 AM), the information on the user (name: Bu-ja Kang, address: 232-4, seocho-dong, kangnam-gu, Seoul, and contact: 02-577-1077), and the information on the output device (type: B3726).

When the object to be read is determined by the money read unit 210 to be the money, the comparison unit 230 determines whether the money identification information, which is received in order to identify the money, is identical to identification information stored in the central management server 220. For example, the serial number (which may be the money identification information that is received) is compared to the money registration information that is stored in the central management server 220 in order to determine if the stored money registration information includes identification information having the same serial number.

When the money identification information is identical to the identification information stored in the central management server 220, the control unit 240 controls history information of the money to be stored in the central management server 220. That is, when the received money identification information is identical to the stored identification information, then the money was already output in the past. In this case, the history information of the money is controlled to be stored in the central management server 220 so as to cope with a situation in which a great amount of bogus notes is used.

The history information of the money may include at least one of information on the read date and time of the money and information on the use history of the money, such that the bogus note is prevented from being used. For example, the history information (information on the read time of the money having a serial number of 1570000: November 23, 2006 05:00 AM, past use history information: August 14, 2006 07:00 AM, past user: Bu-ja Kang), that is, the information on the use history of the money, is stored in the central management server 220.

When the received money identification information is identical to the stored identification information, the control unit 240 may control a warning message to be output indicating a transaction disapproval of the bogus note. For example, the warning message may be displayed on a screen display device. The warning message indicating the transaction disapproval of the bogus note may be, "Do not use the bogus note for an unwholesome purpose. Be mindful that penal punishment may be inflicted when the bogus note is used."

It is understood that other methods of outputting the warning message, aside from displaying the warning message on the screen, may be provided. Alternatively, a device for outputting a sound, such as a speaker, may be connected to the control unit 240, and a warning sound indicating the transaction disapproval of the bogus note may be output when the received money identification information is identical to the stored identification information.

Furthermore, when the received money identification information is identical to the stored identification information, the control unit 240 controls the history information of the money to be transmitted to a public institution's server 260.

In order to prevent the bogus note from being used in advance, the history information of the money is transmitted to the public institution's server 260 such that a manager of the public institution's server 260 manages the history information of the money. The public institution may be, for example, a police station.

Thereafter, the control unit 240 transmits read information such as an image of the money. An output unit 250 outputs the read information of the money transmitted from the control unit 240.

The output unit 250 may be a printer for printing the read information of the money transmitted from the control unit 240. Alternatively, the transmitted read information of the money may be displayed on the screen display device.

The screen display device is used to output the read information of the money transmitted from the control unit 240, and may be, for example, a liquid crystal display (LCD), a plasma display panel (PDP), a thin-film transistor (TFT) LCD, an organic electroluminescence LCD, a cathode ray tube (CRT).

When the received money identification information is not identical to the stored identification information, the control unit 240 receives output authentication information from the user in order to output the money, and controls the received output authentication information to be stored in the central management server 220. The output authentication information may be at least one of the information on the user, detailed information on the output unit 250, and the money identification information. The central management server 220 generates money management information using the history information, the money registration information, and the output authentication information.

The money management information may be stored by date or time and is configured such that a manager easily manages the money management information.

At this time, the central management server 220 includes a user interface unit 221 and a connection control unit 222 and allows a user to output the money management information. The user may be a manager who manages the central management server 220. In addition, a manager of the public institution may be connected to the central management server 220.

A use authentication process of the central management server 220 may, although not necessarily, be required to access the central management server 220, and may be as follows. First, the user interface unit 221 receives an authentication value for use authentication and the connection control unit 222 controls the money management information to be output when the authentication value received from the user interface unit 221 is identical to a reference authentication value which is previously registered for the authentication.

When the authentication value of the user is received from the user interface unit 221, the connection control unit 222 compares the authentication value of the user with the reference authentication value of the user which is previously registered.

Thereafter, when the received authentication value of the user is identical to the reference authentication value of the user which is previously registered, the user interface unit is connected to the central management server 220 such that the money management information may be output.

When the received authentication value of the user is not identical to the reference authentication value of the user which is previously registered, the user is informed of the non-identical result so as to have an opportunity to input the authentication value of the user again.

It is understood that other types of authentication values may be used. When fingerprint information of the user or voice information of the user is input using a fingerprint recognition device or a microphone, the connection control unit 222 respectively extracts a feature point and compass from a reference fingerprint authentication value and a reference voice authentication value, both of which are previously registered.

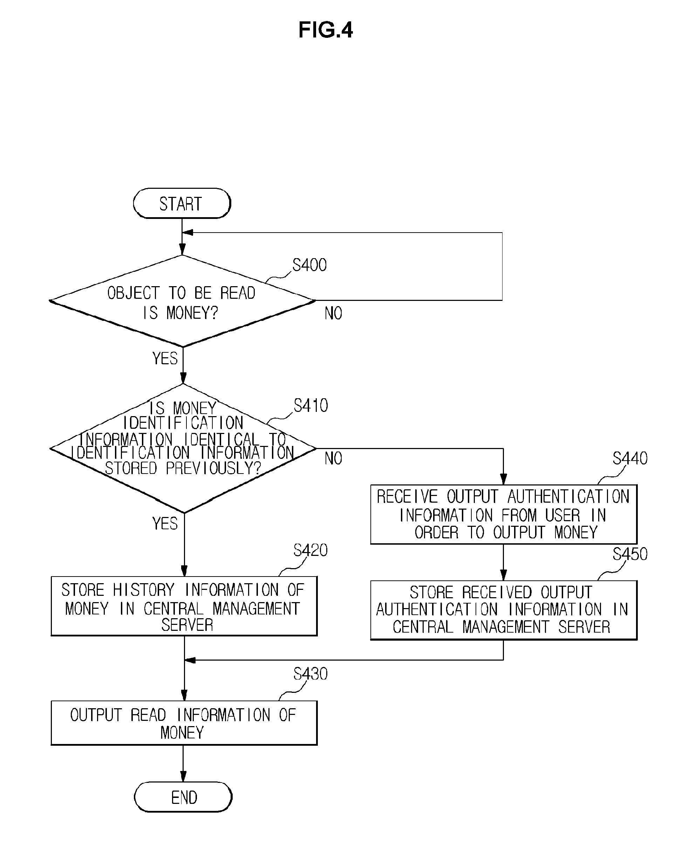

Hereinafter, a bogus note managing method will be described. FIG. 4 is a flowchart illustrating a bogus note managing method according to an embodiment of the present invention. As shown in FIG. 4, it is first determined whether an object to be read is money (operation S400).

When the object to be read is the money, it is determined whether money identification information for identifying the money is identical to identification information of money which is previously stored in a central management server (operation S410).

When the received money identification information is identical to the stored identification information, history information of the money is stored in the central management server 220 (operation S420). The history information may be at least one of information on a read date and time of the money and information on use history of the money.

When the received money identification information is identical to the stored identification information, a warning message indicating a transaction disapproval of the bogus note is, for example, displayed on a screen display device and the history information of the money is transmitted to a public institution's server 260.

Next, the read information of the money is output (operation S430).

When the received money identification information is not identical to the stored identification information, output authentication information is received from the user in order to output the money (operation S440) and the received output authentication information is stored in the central management server 220 (operation S450). The output authentication information may be one of information on the user, detailed information on the output unit, and the money identification information.

After the output authentication information is stored in the central management server 220, the read information of the money is output (operation S430).

As described above, according to aspects of the present invention, there is provided an image forming apparatus, a bogus note managing system including the image forming apparatus, and a bogus note managing method, such that it is possible to accurately and efficiently manage the bogus note such that the bogus note is not used for a bad purpose.

A user who does not use the bogus note for a bad purpose, such as a user who wants to keep the bogus note as a souvenir or a user who scans the money to test an electrophotographic device, can print a banknote as desired. However, when the bogus note is used for a bad purpose, it is possible to trace back the bogus note.

Although a few embodiments of the present invention have been shown and described, it would be appreciated by those skilled in the art that changes may be made in these embodiments without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus comprising:
a read unit (110) to determine whether an object to be read is money;
a storage unit (120) to store identification information of the money;
a comparison unit (130) to compare money identification information, which is received so as to identify the money, with the stored identification information when the object to be read is the money; and
a control unit (140) to control history information of the money to be stored in the storage unit (120).

2. The image forming apparatus as claimed in claim 1, wherein the control unit (140) controls the history information of the money to be stored in the storage unit (120) only when the money identification information is identical to the stored identification information.

3. The image forming apparatus as claimed in claim 1 or claim 2, wherein the money is at least one of a bill, a check, a banknote, and stock.

4. The image forming apparatus as claimed in any preceding claim, wherein the history information of the money comprises at least one of information on a read date and read time of the money, information on a number of copies requested and/or made, and information on use history of the money.

5. The image forming apparatus as claimed in any preceding claim, wherein:
the control unit (140) transmits read information of the money; and
the image forming apparatus further comprises an output unit to output the read information of the money transmitted from the control unit (140).

6. The image forming apparatus as claimed in claim 5, wherein the read information of the money comprises an image of the money.

7. The image forming apparatus as claimed in any preceding claim, wherein the control unit (140) controls a warning message to be output indicating that the money identification information is identical to the stored identification information when the money identification information is identical to the stored identification information.

8. The image forming apparatus as claimed in claim 7, wherein the warning message indicates transaction disapproval of a bogus note.

9. The image forming apparatus as claimed in claim 7 or claim 8, wherein the control unit (140) controls the warning message to be output on a screen display device.

10. The image forming apparatus as claimed in any preceding claim, wherein the control unit (140) controls the history information of the money to be transmitted to a server when the money identification information is identical to the stored identification information.

11. The image forming apparatus as claimed in claim 10, wherein the server is a public institution's server.

12. The image forming apparatus as claimed in any preceding claim, wherein the control unit (140) receives output authentication information from a user and controls the received output authentication information to be stored in the storage unit (120) when the money identification information is not identical to the stored identification information.

13. The image forming apparatus as claimed in claim 12, wherein the output authentication information comprises at least one of information on the user, detailed information on the output unit, and the money identification information.

14. The image forming apparatus as claimed in claim 12 or claim 13, wherein the image forming apparatus outputs read information of the money, such as an image of the money, when the money identification information is not identical to the stored identification information.

15. The image forming apparatus as claimed in any preceding claim, wherein the storage unit (120) stores money registration information comprising the identification information of the money and at least one of a read date and read time of the money, information on a user, and information on an output device for outputting the money.

16. The image forming apparatus as claimed in any preceding claim, wherein the money identification information is a serial number of the money.

17. A method of managing a bogus note, the method comprising:
determining whether an object to be read is money;
receiving money identification information;
comparing the money identification information to stored identification information; and
storing history information of the money.

18. The method as claimed in claim 17, wherein the storing of the history information comprises: storing the history information of the money only when the money identification information is identical to the stored identification information.

19. The method as claimed in claim 17 or claim 18, wherein the history information of the money comprises at least one of information on a read date and read time of the money, information on a number of copies requested and/or made, and information on use history of the money.

20. The method as claimed in any one of claims 17 to 19, further comprising: outputting read information, such as an image, of the money.

21. The method as claimed in any one of claims 17 to 20, further comprising: outputting a warning message indicating that the money identification information is identical to the stored identification information when the money identification information is identical to the stored identification information.

22. The method as claimed in any one of claims 17 to 21, wherein the storing of the history information of the money comprises: transmitting the history information of the money to a server.

23. The method as claimed in claim 22, wherein the transmitting of the history information of the money to the server comprises: transmitting the history information of the money destined for the server when the money identification information is identical to the stored identification information.

24. The method as claimed in any one of claims 17 to 23, further comprising: receiving and storing output authentication information from a user when the money identification information is not identical to the stored identification information.

25. The method as claimed in claim 24, wherein the output authentication information comprises at least one of information on the user, detailed information on the output unit, and the money identification information.

26. The method as claimed in any one of claims 17 to 25, wherein the money identification information is a serial number of the money.

27. The method as claimed in any one of claims 20 to 26, wherein the outputting of the read information comprises: outputting the read information if a number of copies of the object previously made is less than a predetermined number.
